# EUROPÄISCHE PATENTSCHRIFT

(11) **EP 2 176 600 B1**
(45) Veröffentlichungstag und Bekanntmachung des Hinweises auf die Patenterteilung: **04.03.2015**
(21) Anmeldenummer: 08801510.2
(22) Anmeldetag: 01.08.2008
(51) Int. Cl.: F16L 5/04, A62C 3/16

(54) **DÄMMUNG EINES LÜFTUNGSKANALS GEGEN EINEN WAND-/DECKENDURCHBRUCH**
INSULATION OF A VENTING DUCT AGAINST A WALL OR CEILING OPENING
AMORTISSEMENT D'UN CANAL DE VENTILATION VIS-À-VIS D'UN PASSAGE DE PAROI OU DE PLAFOND

(30) Priorität: 08.08.2007 DE 102007037243
(43) Veröffentlichungstag der Anmeldung: 21.04.2010
(73) Patentinhaber: SAINT-GOBAIN ISOVER, 92400 Courbevoie (FR)
(72) Erfinder: KELLER, Horst, 76684 Östringen (DE); KÖHLER, Andreas, 68159 Mannheim (DE); WAHLS, Torsten, 19386 Lübz (DE); ANDERSSON, Leif, S-241 38 Eslöv (SE); FRANTZ, Hans-Jörg, 69488 Birkenau (DE); SCHUMM, Michael, 69198 Schriesheim (DE)
(74) Vertreter: Bockhorni & Kollegen
(86) Internationale Anmeldenummer: PCT/EP2008/006377
(87) Internationale Veröffentlichungsnummer: WO 2009/018978

(56) Entgegenhaltungen:
- EP-A- 1 522 800
- WO-A-02/070962
- DE-U1- 20 103 110
- JP-A- 2001 252 367

## Beschreibung

Die vorliegende Erfindung betrifft eine Dämmung eines Lüftungskanals, insbesondere eines Klimakanals gemäß dem Oberbegriff des Anspruchs 1. Eine weitere Anordnung gemäß dem Oberbegriff von Anspruch 1 ist aus der Druckschrift WO 02/070 962 A1 bekannt.

Lüftungskanäle werden in der Gebäudetechnik benötigt, um Räume mit Frischluft zu versorgen und um sie z.B. mit einer zentral angeordneten Klimaanlage zu verbinden. Die Kanäle werden durch Durchbrüche der Wände und/oder Decken der Räume geführt. In den einschlägigen Normen des Brandschutzes wird für den Fall eines Feuers gefordert, dass es oder sein Rauch sich nicht, oder nur verzögert von einem Gebäudebereich in einen anderen ausbreiten darf. Aus diesem Grund ist der Wand- oder Deckendurchbruch gegen die Ausbreitung des Feuers abzudichten. Hierbei ist zu beachten, dass das Feuer und dessen Rauch sich entweder durch den Lüftungskanal selbst, oder durch den bautechnisch bedingten Spalt zwischen dem Äußeren des Kanals und der Öffnung des Durchbruchs der Wand ausbreiten können. Aus diesen Gründen wird zum einen der Kanal mit einer außenseitig umlaufenden und durchgehenden Schicht aus einem Dämmmaterial, welches beispielsweise Steinwolle ist, ummantelt, um eine Temperaturerhöhung auf der Oberfläche des gedämmten Kanals in einem nicht von einem Brand betroffenen Abschnitt zu verzögern. Des Weiteren wird der Wanddurchbruch abgedichtet. Dies geschieht durch Stopfmaterial, welches in den Spalt zwischen dem Wanddurchbruch und dem Kanal gestopft wird und möglichst unmittelbar in das den Kanal umgebenden Dämmmaterial übergeht. Da dieser Aufbau zur Dämmung noch nicht ausreicht, wird üblicherweise ein Kragen aus Dämmmaterial vorgesehen, welcher außerhalb der oben beschriebenen Dämmung in unmittelbarem Kontakt zur Wand/Decke vorgesehen ist. Tests haben ergeben, dass dieser Kragen zwar eine gute Dichtung des Wanddurchbruchs bewirkt, dass jedoch das Temperaturprofil am Kanal so beeinflusst wird, dass es am Übergang vom Kragen zu der beschriebenen Kanaldämmung zu erhöhten Temperaturen kommen kann. Ferner bedeutet die Anbringung des Kragens einen kostenintensiven zusätzlichen Arbeitsschritt.

Eine Vorrichtung zur Dämmung eines Lüftungskanals ist in der WO2005/108843 A1 (Fig. 5) beschrieben, die einen Klimakanal aufweist, welcher sich durch eine Öffnung in einer Wand erstreckt, wobei der Spalt zwischen dem Kanal und der Öffnung mit Stopfmaterial gefüllt ist. Zusätzlich ist außerhalb des Rohres um das Rohr Dämmmaterial vorgesehen und befindet sich teilweise in Kontakt mit der Öffnung über seine Stirnseite. Hitzebeständiges Klebematerial ist an der Stirnseite des Dämmmaterials vorgesehen, um die Stirnseite des Dämmmaterials mit der Wand zu verbinden.

Aufgabe der vorliegenden Erfindung ist es, einen Kanal im Bereich eines Wanddurchbruchs in baulich einfacher und sicherer Weise gegen Temperaturerhöhungen so zu dämmen, dass die Maßgaben der einschlägigen Brandschutznormen erfüllt werden. Hierbei soll eine hohe Feuerwiderstandsdauer erreicht werden und eine Abdichtung gegen einen Austritt von Rauchgasen gegeben sein. Ferner soll die Lösung kostengünstig und einfach verarbeitbar sein.

Diese Aufgabe wird erfindungsgemäß durch die in Anspruch 1 gekennzeichneten Merkmale erreicht.

Erfindungsgemäß wird ein. Lüftungskanal, insbesondere ein Klimakanal, der durch einen Durchbruch in einer Wand oder Decke oder dergleichen geführt ist, derart gedämmt, dass er entsprechenden Feuerwiderstandsstandards gerecht wird, etwa die Bestimmungen der Feuerwiderstandsnorm DIN 4102-6 erfüllt, insbesondere L 30 bis L 120 je nach Auslegung, d. h. einen Feuerwiderstand von 30 min., 60 min., 90 min. bzw. 120 min. erfüllt. Hierbei ist am Kanal außen umlaufend ein Dämmmaterial vorgesehen, welches eine zumindest teilweise in Richtung des Durchbruchs weisende Stirnfläche aufweist, woran zumindest bereichsweise ein temperaturbeständiges Klebematerial vorgesehen ist. Das Dämmmaterial ist bevorzugt aus Mineralwolle.

Die Dämmung wird benötigt, um ein Feuer, das in einem ersten Raum ausgebrochen ist, an dem Übertritt in einen zweiten, benachbarten Raum zu hindern oder zu verzögern, wobei ein Wanddurchbruch zwischen beiden Räumen vorgesehen ist, durch den der genannte Kanal geführt wird. Ebenso kann der Durchbruch in einer Decke oder Dach oder dergleichen liegen, wobei aber der Einfachheit halber im Folgenden v.a. von Wanddurchbruch gesprochen werden und dabei die anderen Ausführungsformen mit umfasst sein sollen. Die Feuerwiderstandsnormen sind die DIN 4102-6 und die entsprechende EN 1366 T1.

Als Dämmmaterial eignet sich beispielsweise Mineralwolle, insbesondere eine Mineralwolle, wie sie beispielsweise aus der EP 1522800 A1 bekannt ist. Der Einsatz dieser Dämmmaterialien für die erfindungsgemäße Dämmvorrichtung ist besonders vorteilhaft und stellt einen weiteren erfindungsgemäßen Aspekt dar. Diese Wolle umfasst typischerweise eine Vielzahl von dünnen Fasern aus einem temperaturbeständigen Material und weist vorzugsweise einen Schmelzpunkt nach DIN 4102 Teil 17 von mindestens 1000°C auf. Allerdings können neben diesen Dämmmaterialien auch herkömmliche Mineralwollen, wie Steinwolle oder ggf. auch Glaswolle in Betracht kommen. Verallgemeinert ist aber jedes Material denkbar, das eine ausreichende Temperaturbeständigkeit aufweist und faserig ist.

Da erfindungsgemäß die Stirnseite, welche zu dem Wanddurchbruch zeigt, mit einem Klebematerial versehen ist, sind hier die einzelnen Fasern verklebt. Anders ausgedrückt, es befindet sich das Klebematerial stirnseitig zwischen den einzelnen Fasern. Wenn nun das Dämmmaterial stirnseitig an der Wand anliegt und Rauchgas von dem brennenden Raum über den Wanddurchbruch, als den Spalt zwischen Kanal und Wand in den Nachbarraum zu gelangen droht, sorgt die durch das Klebematerial erhöhte Dichte an der Stirnseite dafür, dass das Eindringen in den Nachbarraum behindert wird. Die einzige Möglichkeit ist, dass das Rauchgas in einen Bereich zwischen Kanal und dem Dämmmaterial dringt. Da dieser Spalt, soweit vorhanden, aber sehr schmal ist, wird zum einen das Eindringen behindert und zum anderen ist es an diesem Zwischenbereich nur bedingt schädlich, da es, bis es den Nachbarraum selbst erreicht, noch das Dämmmaterial durchströmen muss. Hierdurch kann eine entsprechende zeitliche und mengenmäßige Verzögerung und Reduzierung des eindringenden Rauchgases erreicht werden, so dass man entsprechenden Feuerwiderstandsstandards gerecht wird.

In einer vorteilhaften Ausführungsform ist das Dämmmaterial mit der Wand verklebt, wodurch erreicht wird, dass die Stirnseite des Dämmmaterials sicher mit der Wand verbunden ist. Bei einer Feuerwiderstandsklasse von 60-90min nach EN 1366 T1, wird beispielsweise eine Dicke von dem kanalumgebenden Dämmmaterial von bis zu 90mm benötigt. Die Größe des Spalts zwischen Wanddurchbruch und Kanal beträgt üblicherweise umlaufend 50mm, wobei diese Spaltbreite benötigt wird, um bei der Montage den Kanal, mit daran befestigten Verbindungselementen, einzubauen. Somit ergibt sich hier als Differenz eine Überlappungsbreite von 40mm, in der das Dämmmaterial mit der Wand verklebt ist. Eindringender Rauch kann so nicht ins Innere des benachbarten Raumes gelangen. Die Verklebung wird so ausgelegt, dass sie auch bei hohen Temperaturen eine hohe Standzeit aufweist.

Bei der Montage der Dämmung wird darauf geachtet, dass das Dämmmaterial umlaufend und mit einer elastischen Spannung gegen die Wand drückt. Wenn jedoch heißes Rauchgas oder Feuer das Dämmmaterial erwärmt, verändert sich dessen Eigenschaft und es kann sich verformen und erweichen. Während herkömmlich hierbei ein Spalt zwischen Wand und Dämmmaterial entstehen kann, sorgt die Verklebung dafür, dass auch bei hohen Temperaturen eine dauerhafte Verbindung zwischen Wand und Dämmmaterial gewährleistet bleibt.

In dem Spalt zwischen Kanal und Wand wird üblicherweise ein Stopfmaterial vorgesehen. Dieses Stopfmaterial weist auch gute Dämmeigenschaften bei hohen Temperaturen auf und kann das gleiche Material wie das den Kanal umgebende Dämmmaterial sein. Das Stopfmaterial kann eine oder mehrere Bahnen oder Platten von Dämmmaterial umfassen, welche in den Spalt eingelegt oder eingestopft werden oder es kann eine strukturfreie, wollartige Substanz sein. Vorteilhafter Weise wird die Stirnseite des Dämmmaterials mit diesem Stopfmaterial verklebt. Hierdurch wird um den Kanal umlaufend eine ununterbrochene Hülle von dämmendem Material erhalten, und die Ausbreitung des Feuers und Rauchs in das Rauminnere behindert.

Das Dämmmaterial muss nicht unmittelbar an der Wand verklebt sein, sondern es ist auch denkbar, dass an der Wand weitere Bauelemente, wie Profile, Platten oder dergleichen dauerhaft befestigt sind, an denen das Dämmmaterial verklebt ist.

Um die Dämmeigenschaften des Stopfmaterials zu verbessern, ist es vorteilhafter Weise mit einem Schaumbildner versehen. Ein Schaumbildner umfasst Substanzen, welche bei Erwärmung Schaum freisetzen, welcher brandhemmend wirkt und so die Flammausbreitung reduziert oder verzögert.

Vorteilhafter Weise wird das Stopfmaterial in einem ersten Arbeitsschritt in den genannten Spalt eingebracht und anschließend an den beiden in Richtung der Wand zeigenden Stirnflächen mit dem Schaumbildner versehen. Nach dem Aushärten/Trocknen des Schaumbildners wird die so veränderte Oberfläche des Stopfmaterials verwendet, um hier das Dämmmaterial zu verkleben. Durch den Schaumbildner wird die Ausbreitung des Feuers effektiv begrenzt und verzögert.

Das genannte Klebematerial ist vorzugsweise ein Silikatkleber basierender Kleber. Derartige Klebematerialen haben den Vorteil, dass sie leicht zu verarbeiten sind, also ohne großen Aufwand - wie durch Einstreichen - auf das Dämmmaterial aufgebracht werden können. Auch kann zuerst die Wand, oder das Stopfmaterial mit dem Kleber versehen, und anschließend mit dem ggf. ebenfalls mit Kleber versehenen Dämmmaterials verbunden werden.

Vorteilhafter Weise wird die beschriebene Dämmung bei Kanälen eingesetzt, welche einen rechteckförmigen oder insbesondere quadratischen Querschnitt aufweisen. Da der Kanal mit Platten des Dämmmaterials umgeben ist, können entsprechend zugeschnittene Platten einfach aufgelegt und mit Stiften oder Bolzen an dem Kanal befestigt werden.

Es können an dem Kanal im Bereich des Durchbruchs Profilelemente befestigt sein. Da im Falle eines Brandes hohe Temperaturen auftreten, entstehen auch am Kanal selbst, welcher aus einem dünnen Metallblech bestehen kann, Temperaturdehnungen und -spannungen. Wie beschrieben befindet sich im Wanddurchbruch außerhalb des Kanals das Stopfmaterial, wodurch der Kanal sich nicht auswölben kann. Stattdessen könnte er sich an diesen Stellen beulenförmig einwölben. In axialer Sicht des Durchbruchs würde sich hierdurch ein erweiterter Spalt ergeben, durch den das Feuer oder Rauchgas dringen kann. Um diesen nachteiligen Effekt zu verringern oder vermeiden, kann ein Profilelement, wie ein Winkelprofil, an dem Kanal befestigt werden, was über Vernietungen geschehen kann. Als Winkelprofil ist ein Profil der Dicke von 3mm+/- 1mm und Flankenlänge von 20mm bis 40mm vorteilhaft. Ebenfalls sind U-Profile oder Rechteckprofile denkbar.

Vorteilhafter Weise ist jeweils ein Winkelprofil mit jeweils einer seiner Flanken an jeder Seite des Kanals befestigt. Die Längsausrichtung der Profile liegt in der Ebene der Wand. Indem mindestens eines der Profile länger ist als die Größe des Wanddurchbruchs wird eine Überlappung von Profil zu Wand erreicht. So kann das Profil bspw. mittels Verschraubungen an der Wand befestigt werden. Durch diese Befestigungen wird der Kanal gegenüber dem Durchbruch justiert. So wird der Kanal lagenstabil gehalten, so dass keine Spaltbreitenänderungen auftreten können, welche die Dichtwirkung über den Durchbruch beeinträchtigen würden.

Nachfolgend werden bevorzugte Ausführungsbeispiele der vorliegenden Erfindung anhand von Zeichnungen erklärt. Es zeigen:
- Fig. 1:: ein Lüftungskanal mit Wanddurchbruch gemäß dem Stand der Technik,
- Fig. 2:: eine Ansicht des Kanals und Wanddurchbruch vor der Montage des Dämmmaterials,
- Fig. 3:: eine erfindungsgemäße Dämmung, bei der der Spalt zwischen Kanal und Durchbruch kleiner ist, als die Dicke des Dämmmaterials und
- Fig. 4:: eine erfindungsgemäße Dämmung, bei der der Spalt zwischen Kanal und Durchbruch größer ist, als die Dicke des Dämmmaterials

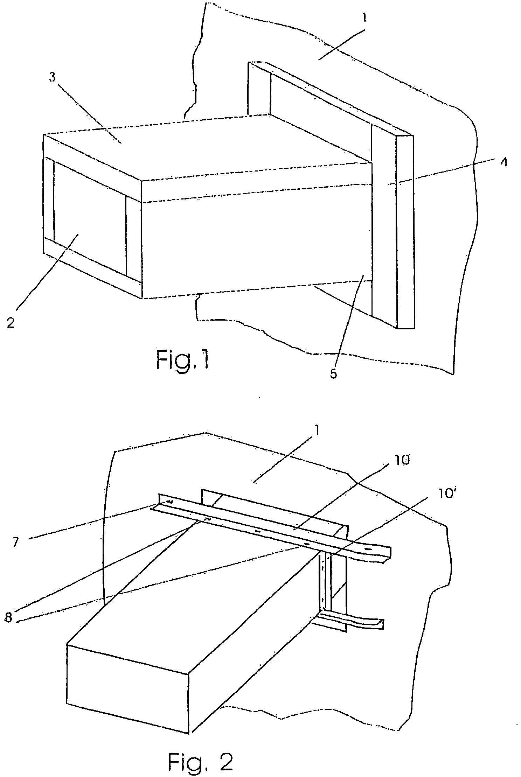

Fig. 1 zeigt einen Durchgang eines Kanals 2 durch eine Mauer 1 in der Ausführungsform des Standes der Technik. Der Kanal ist zu allen vier Außenseiten mit Dämmmaterial 3 umgeben. Am Übergang vom Dämmmaterial 3 zur Wand 1 ist ein Kragen 4 aus Dämmmaterial angeordnet, welcher den Wanddurchbruch gegen die Flammen/Rauchgas abdichtet. Der Kragen wird mit speziellen Nägeln bzw. Dübeln (nicht dargestellt) an der Wand 1 befestigt wird und drückt gegen das Dämmmaterial 3. Als Dämmmaterial wird dabei überwiegend Steinwolle verwendet. Der Kragen 4 kann die Temperaturen an den Meßpunkten nach EN 1366 Teil 1 beeinflussen, was sich auf die Feuerwiderstandsdauer auswirken kann.

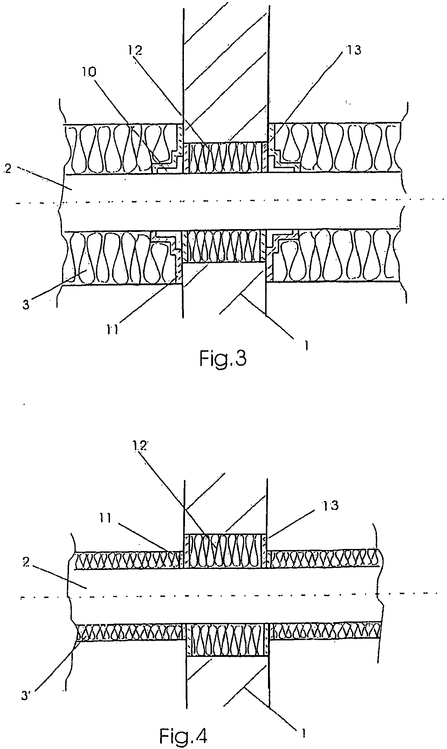

Fig.3 und Fig. 4 zeigen zwei Ausführungsformen der erfindungsgemäßen Dämmung als Schnitt durch eine Wand 1.

Fig. 3 zeigt eine Ausführungsform mit einer Dicke des Dämmmaterials 3 von 90 mm. Es wird für die Feuerwiderstandsfähigkeit von 60-120 min nach EN 1366 Teil 1 ein Dicke von 30 - 90 mm verwendet. Der Spalt zwischen Kanal und Wanddurchbruch, in welchem sich das Stopfmaterial 12 befindet, hat beispielsweise eine Dicke von 50 mm. Wenn beispielsweise der Kanal eine Höhe von 300mm aufweist, wird somit bauseitig eine Höhe des Wanddurchbruchs von 400 mm gewählt, so dass der Kanal, mit den daran vorgesehenen Befestigungselementen (wie endseitigem Flansch, nicht dargestellt) gut eingebaut werden kann. Nach dem Einbau des Kanals besteht somit von Kanal zu Wanddurchbruch ein umlaufender Spalt von etwa 50 mm Breite. Dieser Spalt wird in herkömmlicher Weise mit Stopfmaterial 12 aus Mineralwolle gefüllt, wobei vorzugsweise auf eine dichte Packung geachtet wird, um so im Brandfall eine gute Dichtung gegen Rauchgas und Feuer zu erreichen. An beiden Stirnseiten des Stopfmaterials wird eine Schicht eines feuerhemmenden Materials, insbesondere ein Schaumbildner 13 vorgesehen. Derartige feuerhemmende Schaumbildner sind im Handel verfügbar. Hierzu benachbart befinden sich Winkelprofile 10, die am Kanal 2 anliegen und mit ihm über Nieten 8 (Fig. 2) in herkömmlicher Weise befestigt sind.

Wie im Schnitt der Fig. 3 dargestellt, ummantelt das Dämmmaterial 3 aus Mineralwolle den Kanal 2. An den Stirnflächen des Dämmmaterials, die zu der Wand 1 zeigen, ist eine Schicht 11 aus Klebematerial vorgesehen. Diese Schicht 11 ist in drei Bereiche unterteilt. In einem äußeren Bereich (also von der Mitte des Kanals entfernt) ist das Dämmmaterial 3 mit der Wand 1 verklebt. In einem mittleren Bereich verklebt das Klebematerial 11 das Dämmmaterial 3 mit dem mit Schaumbildner 13 beschichteten Stopfmaterial 12. In einem inneren Bereich wird das Dämmmaterial mit den Winkelprofilen 10 verklebt.

Bei den Darstellungen der Fig. 3 und 4 sind die Schichten des Schaumbildners 13 und des Klebematerials 11 zur besseren Veranschaulichung überproportional groß dargestellt.

Die Dämmwirkung funktioniert wie folgt: Zum einen ist der Brandfall denkbar, bei dem sich das Feuer und/oder das heiße Rauchgas innerhalb des Kanals 2 ausbreitet. Hier wirkt das um den Kanal 2 umlaufend angeordnete Dämmmaterial 3 dahingehend, dass die Wärme verzögert in den Innenraum des Raumes abgegeben wird. Die normgemäß definierte, maximal zulässige Oberflächentemperatur des Dämmmaterials beträgt bspw. 180°C, so dass seine Dicke entsprechend und auch in Bezug auf die geforderte Dauer des Feuerwiderstands gewählt werden muss.

Des Weiteren ist denkbar, dass das Feuer sich außerhalb des Kanals, also über den zwischen Kanal und Mauerdurchbruch befindlichen Spalt ausbreitet. Wenn angenommen wird, dass das Feuer auf der rechten Seite der in Fig. 3 dargestellten Wand 1 ausgebrochen ist, so kann angenommen werden, dass das Dämmmaterial 3, welches sich rechts der Wand befindet, relativ schnell zerstört wird. Im Folgenden verzögert der auf der rechten Seite der Wand dargestellte Schaumbildner 13 das Übertreten der Flammen in den links dargestellten Raum. Ferner muss Feuer und Rauch durch das Stopfmaterial 12 dringen, wo es auf die zweite Schicht des Schaumbildners 13 trifft. Abhängig von der Intensität des Feuers sind die genannten Mittel natürlich keine absolute Barriere, sondern bewirken eine gewünschte zeitliche Verzögerung der Ausbreitung. Wenn das Feuer diese zweite Schicht des Schaumbildners 13 durchdrungen hat, trifft es auf das auf dem Dämmmaterial 3 vorgesehene Klebematerial 11, welches folgende zwei Hauptfunktionen hat: Erstens verklebt das Klebematerial 11 die Fasern des Dämmmaterials 13, und erhöht dadurch die stirnseitige Dichte des Materials. Hierdurch werden die Flammen und/oder Rauch beim Durchdringen des Dammmaterials behindert. Da das Klebematerial 11, wie bereits beschrieben, temperaturresistente Materialien, wie Silikatkleber umfasst, weist es eine hohe Temperaturfestigkeit auf und behindert so zusätzlich die Flammausbreitung. Zum anderen verbindet das Klebematerial 11 das Dämmmaterial 3 mit der Wand 1. Ohne diese Verklebung könnte das Feuer sich hier einen Spalt bahnen und in das Innere des Raumes gelangen. Da diese Möglichkeit aufgrund der Verklebung nicht besteht, kann es nur in den Bereich zwischen Kanal und Dämmmaterial dringen. Da es von hier aus, bis es zum Inneren des Raumes gelangt, noch die Dicke des Dämmmaterials, welches in diesem Beispiel 90mm beträgt, überwinden muss, wird eine effektive Behinderung der Flammausbreitung realisiert, was zu hohen Weiten der Feuerwiderstandsfähigkeit führt. Somit können in einfacher Weise entsprechende Feuerwiderstandsstandards, insbesondere die Feuerwiderstandsklassen EI 60, EI 90 und EI 120 eingehalten werden.

Fig. 4 zeigt eine alternative Ausführungsform, bei der der Kanal 2 mit einer deutlich dünneren Schicht des Dämmmaterials 3' ummantelt ist. Diese dünnere Dämmschicht von 30- 35mm Dicke wird in Anwendungsbereichen verwendet, wenn ein Feuerwiderstand von 15-30 min benötigt wird. In diesem Fall werden die Profilelemente 10 nicht benötigt, da hier die Verformungen des Kanals 2 keinen wesentlichen Einfluss auf das Versagen der Dämmung haben. Ebenso wie bei dem in Fig. 3 dargestellten Anwendungsfall, wird auch hier der Spalt zwischen Wanddurchbruch und Kanal 2 mit Stopfmaterial 12 aus Mineralwolle versehen, welches stirnseitig auch mit entsprechendem Schaumbildner 13 versehen wird. Gegen das mit Schaumbildner versehene Stopfmaterial 12 wird mittels Klebematerial 11 das Dämmmaterial 2 verklebt.

Die Funktionsweise des in Fig. 4 dargestellten Anwendungsfalls ähnelt dem der Fig.3 Jedoch ist das Dämmmaterial 2 stirnseitig ausschließlich an dem mit Schaumbildner 13 beschichteten Stopfmaterial 12 verklebt. Wenn das Feuer im Brandfall den Wanddurchbruch zwischen dem Kanal 2 und dem Stopfmaterial 12 überwindet, so kann es nicht unmittelbar in das Innere des benachbarten Raumes gelangen, sondern wird sich weiter zwischen dem Dämmmaterial 3' und dem Kanal ausbreiten. Hierdurch wird ebenfalls die Flammausbreitung entsprechend behindert.

Obwohl zur Erzielung einer Feuerwiderstandsklasse EI 15 oder EI 30 nicht erforderlich, können auch bei Ausführungen nach Fig. 4 Winkelprofile zur Steifigkeitserhöhung und Montageerleichterung vorgesehen sein.

Fig. 2 zeigt die Winkelprofile 10 und 10' zur Verbesserung der Formsteifigkeit des Kanals. So sind in Fig. 2 zwei Winkelprofile 10 dargestellt, welche mittels drei Befestigungspunkten 8 an dem Kanal 2 befestigt sind. Ebenfalls sind an den Seiten des Kanals Profile 10' befestigt. Ohne diese Profile könnte sich das Blech des Kanals verziehen und/oder einwölben, was einen Spalt zwischen Stopfmaterial 12 und Dämmmaterial 3 zu dem Blech des Kanals bewirken würde, durch den sich Feuer und Rauch ausbreiten könnten. Um dies zu vermeiden, wird die Steifigkeit des Kanals in diesem Bereich durch die Profile erhöht. Als Befestigungsmittel an den Befestigungspunkten 8 eignen sich vor allem Nieten oder auch Verschraubungen. Ferner sind die Winkelprofile 10 mit einer Wandbefestigung 7, wie einer Verschraubung, an der Wand 1 befestigt. Hierdurch wird die Lage des Kanals selbst relativ zum Wanddurchbruch sichergestellt. An den Längsseiten des Kanals 2 sind zwei Profile 10 dargestellt und ferner zwei weitere Winkelprofile 10' an den Querseiten, welche kürzer und nicht an der Wand 1 befestigt sind. Wenn die Anordnung gemäß Fig. 2 mit Dämmmaterial 3 ummantelt und mit Stopfmaterial 12 versehen wird, ergibt sich die Ausführung, wie sie in Fig. 3 dargestellt ist.

Als Material für den Kanal eignet sich Metallblech, insbesondere Stahlblech, welches gegen Korrosion feuerverzinkt sein kann. Die Dicke sollte nicht unter 0,5mm und nicht über 2mm sein, wobei eine Dicke zwischen 0,7 und 1,2 mm vorteilhaft ist. Das genannte Winkelprofil kann ein Stahlprofil der Dicke von 3mm und der Flankenlänge von 20 oder 30 mm sein.

## Patentansprüche

1. Vorrichtung zur Dämmung eines Lüftungskanals, insbesondere eines Klimakanals welcher durch einen Durchbruch in einer Wand (1) oder Decke oder dergleichen geführt ist und ein Spalt zwischen Kanal (2) und Durchbruch mit Stopfmaterial (12) ausgefüllt ist und bei der am Kanal (2) außen umlaufend ein Dämmmaterial (3) vorgesehen ist und das Dämmmaterial (3) zumindest teilweise an dem Durchbruch mit seiner Stirnfläche anliegt, und an der Stirnfläche des Dämmmaterials zumindest bereichsweise bevorzugt vollflächig, ein temperaturbeständiges Klebematerial (11) vorgesehen ist
**dadurch gekennzeichnet, dass**
das Stopfmaterial (12) an einer zum Klebematerial (11) weisenden Seite mit einem feuerhemmenden Schaumbildner (13) beschichtet ist und
dass das temperaturbeständige Klebematerial (11) das Dämmmaterial (3) zumindest teilflächig mit dem mit Schaumbildner beschichteten Stopfmaterial verklebt.

2. Vorrichtung nach Anspruch 1,
**dadurch gekennzeichnet, dass**
das temperaturbeständige Klebematerial (11) das Dämmmaterial (3) zumindest teilflächig, vorzugsweise vollflächig mit Profilelementen (10 oder 10'), insbesondere L-förmigen Winkelschienen verklebt, die im Bereich des Durchbruchs an dem Kanal (2) und/oder an der den Durchbruch umgebenden Wand oder Decke (1) oder dergleichen befestigt sind.

3. Vorrichtung nach Anspruch 1 oder 2,
**dadurch gekennzeichnet, dass**
das temperaturbeständige Klebematerial (11) das Dämmmaterial (3) zumindest teilflächig, vorzugsweise vollflächig mit der Wand oder Decke (1) verklebt.

4. Vorrichtung zur Dämmung gemäß einem der vorangegangenen Ansprüche,
**dadurch gekennzeichnet, dass**
das temperaturbeständige Klebematerial (11) ein Silikatkleber, insbesondere ein auf Wasserglas basierender Kleber ist.

5. Vorrichtung zur Dämmung gemäß einem der vorangegangenen Ansprüche,
**dadurch gekennzeichnet, dass**
der Kanal (2) rechteckförmig ist.

6. Vorrichtung zur Dämmung gemäß einem der Ansprüche 1 bis 5,
**dadurch gekennzeichnet, dass**
die Dicke des Dämmmaterials (3) größer ist als der Spalt (12) und das Klebematerial (11) das Dämmmaterial (3) sowohl an dem Stopfmaterial (12), als auch an der Wand oder Decke (1) verklebt.

7. Vorrichtung nach einem der Ansprüche 1 bis 6,
**dadurch gekennzeichnet, dass**
das Dämmmaterial (3) und das Stopfmaterial (12) durch Mineralwolle gebildet sind.

8. Vorrichtung nach Anspruch 7,
**dadurch gekennzeichnet, dass**
das Dämmmaterial (3) und das Stopfmaterial (12) aus Steinwolle gebildet sind.

9. Vorrichtung nach Anspruch 7,
**dadurch gekennzeichnet, dass**
das Dämmmaterial (3) und das Stopfmaterial (12) aus Mineralwolle mit der Zusammensetzung gebildet ist:
| | | | |
|---|---|---|---|
| SiO₂ | 39 - 55 % | vorzugsweise | 40 - 52 % |
| Al₂O₃ | 16 - 27 % | vorzugsweise | 16 - 26 % |
| CaO | 9,5 - 20 % | vorzugsweise | 10 - 18 % |
| MgO | 1 - 5 % | vorzugsweise | 1 - 4,9 % |
| Na₂O | 0 - 15 % | vorzugsweise | 2 - 12 % |
| K₂O | 0 - 15 % | vorzugsweise | 2 - 12 % |
| R₂O (Na₂O + K₂O) | 10 - 14,7 % | vorzugsweise | 10 - 13,5 % |
| P₂O₅ | 0 - 3 % | insbesondere | 0 - 2 % |
| Fe₂O₃ (Eisen gesamt) | 1,5 - 15 % | insbesondere | 3,2 - 8 % |
| B₂O₃ | 0 - 2 % | vorzugsweise | 0 - 1 % |
| TiO₂ | 0 - 2 % | vorzugsweise | 0,4 - 1 % |
| Sonstiges | 0 - 2,0 % | | |
wobei insbesondere die Zusammensetzung der Mineralfasern des Dämmelements (4) ein Alkali/Erdalkali-Massenverhältnis von < 1 aufweist, und dass die Faserstruktur des Dämmelements (4) bestimmt ist durch einen mittleren geometrischen Faserdurchmesser ≤ 4 µm, eine Rohdichte im Bereich von 20 bis 120 kg/m³ und einen Anteil des Bindemittels bezogen auf die Fasermasse des Dämmelements (4) in Form einer Platte im Bereich von 4 bis 7 Gew.-% oder in der Form einer Drahtnetzmatte im Bereich von 0,5 bis 1 Gew.-%.

## Claims

1. Device for the purpose of insulating a ventilation duct, especially an air-conditioning duct passing through a penetration in a wall (1) or ceiling or the like, and a gap between duct (2) and penetration is filled with packing material (12) and wherein insulation material (3) is provided around the outside of the duct (2), and the insulating material (3) makes at least partial contact with the penetration via its end face, and a heat-resistant adhesive material (11) is provided over the end face of the insulating material, preferably over the full surface in some sections,
**characterised by** the fact that
the packing material (12) at an end pointing to the adhesive material (11) is coated with a fire-inhibiting foam-forming agent (13) and
that the heat-resistant adhesive material (11) bonds at least part of the surface of the insulating material (3) to the packing material coated with the foam-forming agent.

2. Device in accordance with claim 1,
**characterised by** the fact that
the heat-resistant adhesive material (11) bonds at least part of the surface of the insulating material (3), preferably the full surface, to angle elements (10 or 10'), especially L-sections, which, in the vicinity of the penetration, are mounted to the duct (2) and/or to the wall or ceiling (1) or the like surrounding the penetration.

3. Device in accordance with claim 1 or 2,
**characterised by** the fact that
the heat-resistant adhesive material (11) bonds at least part of the surface of the insulating material (3), preferably the full surface, to the wall or ceiling (1).

4. Device for the purpose of insulation in accordance with any of the previous claims,
**characterised by** the fact that
the heat-resistant adhesive material (11) is a silicate adhesive, especially an adhesive based on waterglass.

5. Device for the purpose of insulation in accordance with any of the previous claims,
**characterised by** the fact that
the duct (2) is rectangular.

6. Device for the purpose of insulation in accordance with any of claims 1 to 5,
**characterised by** the fact that
the thickness of the insulating material (3) is greater than the gap (12) and the adhesive material (11) bonds the insulating material (3) both to the packing material (12) and to the wall or ceiling (1).

7. Device in accordance with any of claims 1 to 6,
**characterised by** the fact that
the insulating material (3) and the packing material (12) are formed by mineral wool.

8. Device in accordance with claim 7,
**characterised by** the fact that
the insulating material (3) and the packing material (12) are formed from rock wool.

9. Device in accordance with any of claims 1 to 6,
**characterised by** the fact that
the insulating material (3) and the packing material (12) are formed from material wool of the following composition:
| | | | |
|---|---|---|---|
| SiO₂ | 39 - 55 % | preferably | 40 - 52 % |
| Al₂O₃ | 16 - 27 % | preferably | 16 - 26 % |
| CaO | 9.5 - 20 % | preferably | 10 - 18 % |
| MgO | 1 - 5 % | preferably | 1 - 4.9 % |
| Na₂O | 0 - 15 % | preferably | 2 - 12 % |
| K₂O | 0 - 15 % | preferably | 2 - 12 % |
| R₂O (Na₂O + K₂O) | 10 - 14.7 % | preferably | 10 - 13.5 % |
| P₂O₅ | 0 - 3 % | especially | 0 - 2 % |
| Fe₂O₃ (iron, total) | 1.5 - 15 % | especially | 3.2 - 8 % |
| B₂O₃ | 0 - 2 % | preferably | 0 - 1 % |
| TiO₂ | 0 - 2 % | preferably | 0.4 - 1 % |
| Other | 0 - 2.0 % | | |
wherein especially the composition of the mineral fibres of the insulating element (4) has an alkali/alkaline earth mass ratio of < 1, and that the fibre structure of the insulating element (4) is determined by a mean geometrical fibre diameter ≤ 4 µm, a gross density in the range of 20 to 120 kg/m³ and a binder content, expressed in terms of the fibre mass of the insulating element (4), in the range 4 to 7 wt.% in the form of a panel or 0.5 to 1 wt.% in the form of a wire mesh mat.

## Revendications

1. Dispositif d'isolation d'un canal de ventilation, en particulier d'un canal de conditionnement d'air qui passe à travers une percée ménagée dans un mur (1) ou plafond ou similaire, et une fente entre ledit canal (2) et ladite percée est remplie de matériau de bourrage (12), et dans lequel un matériau isolant (3) est prévu sur le canal (2) en s'étendant tout autour à l'extérieur, et ledit matériau isolant (3) s'appliquant au moins en partie, par sa surface frontale, sur ladite percée, et sur ladite surface frontale du matériau isolant est prévu au moins par zones, de préférence sur toute la surface, une matière adhésive (11) résistante à chaud,
**caractérisé par le fait que** le matériau de bourrage (12) est revêtu d'un agent moussant (13) ignifuge sur une face montrant vers la matière adhésive (11) et que la matière adhésive (11) résistante à chaud colle le matériau isolant (3), au moins sur une surface partielle, sur le matériau de bourrage revêtu d'agent moussant.

2. Dispositif selon la revendication 1, **caractérisé par le fait que** la matière adhésive (11) résistante à chaud colle le matériau isolant (3), au moins sur une surface partielle, de préférence sur toute la surface, sur des éléments profilés (10 ou 10'), en particulier équerres en L, qui sont fixés au niveau de la percée sur le canal (2) et/ou sur le mur ou plafond (1) ou similaire entourant la percée.

3. Dispositif selon la revendication 1 ou 2, **caractérisé par le fait que** la matière adhésive (11) résistante à chaud colle le matériau isolant (3), au mois sur une surface partielle, de préférence sur toute la surface, sur le mur ou plafond (1).

4. Dispositif d'isolation selon l'une quelconque des revendications précédentes, **caractérisé par le fait que** la matière adhésive (11) résistante à chaud est une colle à base de silicate, en particulier une colle à base de verre soluble.

5. Dispositif d'isolation selon l'une quelconque des revendications précédentes, **caractérisé par le fait que** le canal (2) est en forme de rectangle.

6. Dispositif d'isolation selon l'une quelconque des revendications 1 à 5, **caractérisé par le fait que** l'épaisseur du matériau isolant (3) est plus importante que la fente (12), et que la matière adhésive (11) colle le matériau isolant (3) aussi bien sur le matériau de bourrage (12) que sur le mur ou plafond (1).

7. Dispositif selon l'une quelconque des revendications 1 à 6, **caractérisé par le fait que** le matériau isolant (3) et le matériau de bourrage (12) sont constitués par de la laine minérale.

8. Dispositif selon la revendication 7, **caractérisé par le fait que** le matériau isolant (3) et le matériau de bourrage (12) sont constitués par de la laine de roche.

9. Dispositif selon la revendication 7, **caractérisé par le fait que** le matériau isolant (3) et le matériau de bourrage (12) sont constitués par de la laine minérale ayant la composition:
| | | | |
|---|---|---|---|
| SiO₂ | 39 - 55 % | de préférnce | 40 - 52 % |
| Al₂O₃ | 16 - 27 % | de préférnce | 16 - 26 % |
| CaO | 9,5 - 20 % | de préférnce | 10 - 18 % |
| MgO | 1 - 5 % | de préférnce | 1 - 4,9 % |
| Na₂O | 0 - 15 % | de préférnce | 2 - 12 % |
| K₂O | 0 - 15 % | de préférnce | 2 - 12 % |
| R₂O (Na₂O + K₂O) | 10 - 14,7 % | de préférnce | 10 - 13,5 % |
| P₂O₅ | 0 - 3 % | en particulier | 0 - 2 % |
| Fe₂O₃ (fer total) | 1,5 - 15 % | en particulier | 3,2 - 8 % |
| B₂O3 | 0 - 2 % | de préférnce | 0 - 1 % |
| TiO₂ | 0 - 2 % | de préférnce | 0,4 - 1 % |
| autre | 0 - 2,0 % | | |
en particulier la composition des fibres minérales de l'élément isolant (4) présentant un rapport de masse alcalin/alcalino-terreux de < 1, et que la structure fibreuse de l'élément isolant (4) est déterminée par un diamètre de fibre géométrique moyen de ≤ 4 µm, une masse volumique apparente comprise entre 20 et 120 kg/m³ et une fraction du liant par rapport à la masse de fibres de l'élément isolant (4) sous forme d'une plaque, qui est comprise entre 4 et 7 % en poids ou, sous la forme d'un matelas sur treillis, comprise entre 0,5 et 1 % en poids.
